# FASCICULE DE BREVET EUROPEEN

(11) **EP 1 216 357 B1**
(45) Date de publication et mention de la délivrance du brevet: **02.11.2006**
(21) Numéro de dépôt: 00964372.7
(22) Date de dépôt: 26.09.2000
(51) Int. Cl.: F04B 39/10

(54) **DISPOSITIF DE CLAPET DE REFOULEMENT POUR COMPRESSEUR DE FLUIDE FRIGORIGENE**
AUSLASSVENTILVORRICHTUNG FÜR EINEN KÜHLMITTELVERDICHTER
DELIVERY VALVE DEVICE FOR REFRIGERANT FLUID COMPRESSOR

(30) Priorité: 28.09.1999 FR 9912071
(43) Date de publication de la demande: 26.06.2002
(73) Titulaire: Tecumseh Europe, 38290 La Verpillière (FR)
(72) Inventeur: FRANCOIS, Philippe, Thomson-CSF IPD Brevets, 94117 Arcueil Cedex (FR)
(74) Mandataire: Collet, Alain
(86) Numéro de dépôt international: PCT/FR2000/002656
(87) Numéro de publication internationale: WO 2001/023760

(56) Documents cités:
- DE-A- 19 504 267
- US-A- 4 257 457
- US-A- 5 110 272

## Description

L'invention se rapporte à un dispositif de clapet de refoulement pour compresseur de fluide frigorigène tel que décrit dans US-A-5 203 686 ou US-A-2 372 938.

On connaît des compresseurs de fluide frigorigène de divers types, par exemple alternatifs ou rotatifs, notamment des motocompresseurs hermétiques pour la réfrigération domestique ou commerciale et le conditionnement de l'air. Tous ces compresseurs ont pour fonction de comprimer un fluide frigorigène.

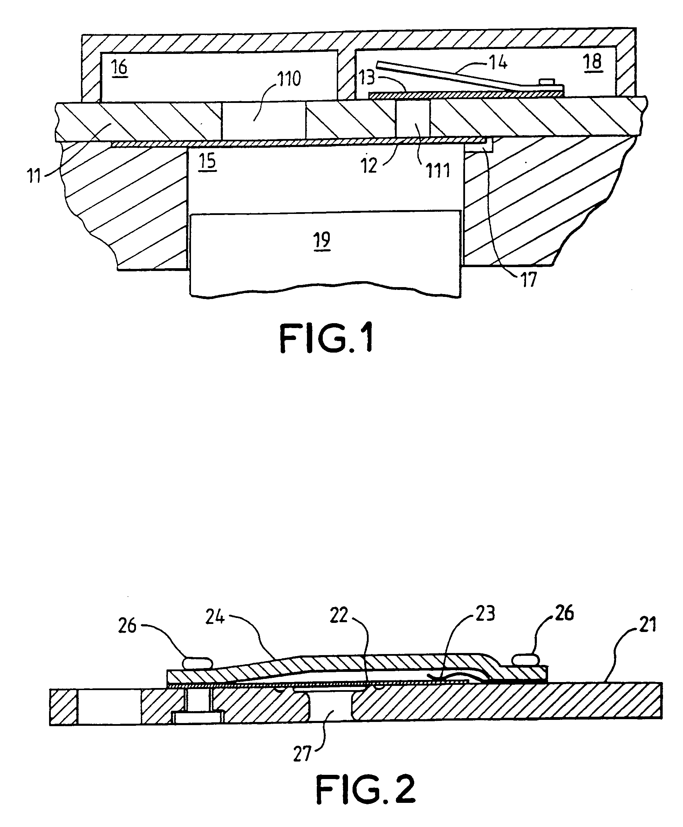

Le principe général de tels compresseurs est illustré sur la figure 1, qui représente schématiquement dans un cylindre un piston 19, une plaque à clapets 11 et une culasse comportant deux chambres 16 et 18. Les parois du cylindre, le piston 19 et la plaque à clapets 11 délimitent une chambre de compression/détente 15. La plaque à clapets 11 comprend un passage d'aspiration 110, entre la chambre de compression/détente 15 et la chambre d'aspiration 16, et un passage de refoulement 111, entre la chambre 15 et la chambre de refoulement 18. Un clapet d'aspiration 12 est positionné sur la plaque à clapets 11 et plaqué sur celle-ci. Lors de la phase d'aspiration, le clapet 12 s'ouvre sous l'effet de la différence de pression entre la chambre de compression/détente 15, qui augmente de volume du fait du mouvement de retrait du piston (supposé ici du type alternatif), et la chambre d'aspiration 16. Le mouvement du clapet d'aspiration est limité par une butée 17. En fin de phase d'aspiration, le clapet 12 se referme contre la plaque à clapets en réalisant l'étanchéité au passage du fluide par le passage 110 lorsque commence la compression.

Un clapet de refoulement 13 est positionné sur la plaque à clapets 11 et plaqué sur celle-ci. Il est généralement maintenu encastré à l'une de ses extrémités et libre à l'autre extrémité. Lors de la phase de refoulement, le clapet 13 s'ouvre sous l'effet de la différence de pression entre la chambre 15, où le fluide se comprime sous l'effet du piston 19, et la chambre de refoulement 18. Le mouvement du clapet de refoulement 13 est limité par une butée de clapet de refoulement 14 contre laquelle le clapet 13 vient en contact. En fin de phase de refoulement, le clapet de refoulement 13 se referme contre la plaque à clapets 11 en réalisant l'étanchéité au reflux du fluide par le passage 111.

En fait, on constate que le fonctionnement des clapets expliqué ci-dessus est plus complexe. En particulier, les clapets d'aspiration et de refoulement s'ouvrent généralement plusieurs fois lors d'une phase donnée du cycle en subissant un mouvement de battement entre plaque à clapets et butée. Ces battements entraînent des chocs métal contre métal générant du bruit et élevant fortement le niveau sonore du compresseur, en particulier en ce qui concerne le clapet de refoulement.

L'invention a pour but de réduire sensiblement le niveau sonore du compresseur en limitant les chocs dus au clapet de refoulement.

L'invention a donc pour objet un dispositif de clapet de refoulement remédiant aux inconvénients décrits ci-dessus grâce à une modification du principe de clapet du côté refoulement consistant à maintenir en contact permanent, à ses deux extrémités, le clapet de refoulement avec la plaque à clapets.

Selon l'invention, il est donc prévu un dispositif de clapet de refoulement pour compresseur de fluide frigorigène selon la revendication 1.

Grâce au fait que le ressort d'appui du clapet lui permet de glisser mais pas de décoller de la plaque à clapets, il n'y a pas de rebondissement et de battement du clapet, donc réduction du niveau sonore.

Un autre avantage important du dispositif selon l'invention est l'augmentation de la valeur de production frigorifique du compresseur, à cylindrée équivalente, grâce à la limitation des effets de retard à la fermeture du clapet de refoulement.

L'invention sera mieux comprise et d'autres caractéristiques et avantages apparaîtront à l'aide de la description ci-après et des dessins joints où :
- la figure 1 est un schéma de principe du système de clapets d'un compresseur connu ;
- la figure 2 représente en coupe le principe d'un dispositif de clapet de refoulement selon l'invention ;
- la figure 3 est un exemple de réalisation d'un dispositif de clapet de refoulement selon l'invention, à un seul clapet ;
- les figures 4 et 5 représentent deux variantes d'un dispositif à double clapet selon l'invention ; et
- la figure 6 est un schéma illustrant une autre caractéristique du clapet de refoulement.

La figure 1 a déjà été décrite ci-dessus.

La figure 2 illustre le principe du dispositif de clapet de refoulement selon l'invention. Sur la plaque de clapets 21 comportant un passage de refoulement 27 est monté un clapet de refoulement 22. Ce clapet est maintenu, à une extrémité, solidaire de la plaque à clapets par l'intermédiaire de moyens de fixation tels qu'un rivet 26 qui fixe également une butée 24 de clapet de refoulement. L'autre extrémité du clapet de refoulement 22 est libre mais maintenue en contact permanent et glissant avec la plaque à clapets 21 par un ressort 23 de préférence à lame dont une extrémité est fixée à la plaque à clapets ainsi que l'autre extrémité de la butée 24 par d'autres moyens de fixation tels qu'un autre rivet 26. Ainsi la butée de clapet 24 assure également le bridage du clapet 22 et du ressort 23 sur la plaque à clapets 21.

De la sorte, l'extrémité libre du clapet peut coulisser contre la plaque à clapets tout en étant maintenue en contact avec celle-ci, lors de la déformation d'ouverture du clapet en phase de refoulement du fluide comprimé. Grâce à ce contact quasi permanent, on limite ainsi considérablement les chocs du clapet contre la butée ou la plaque à clapets, dus à la raideur intrinsèque du clapet et à l'effet d'inertie après ouverture.

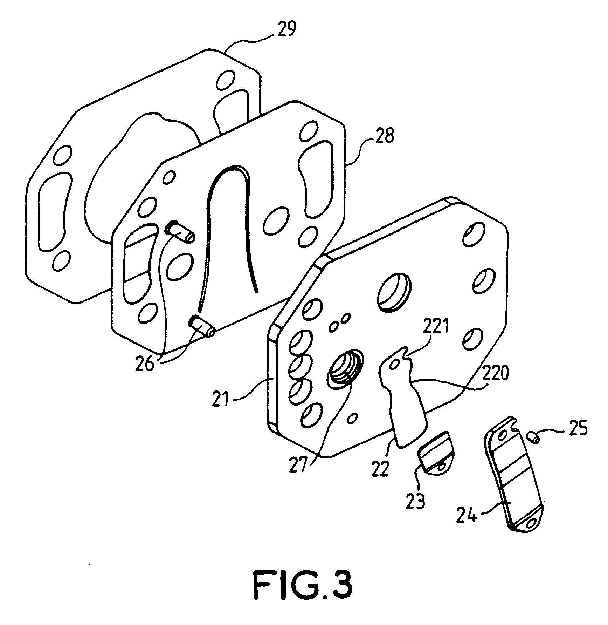

La figure 3 représente un mode de réalisation du dispositif selon l'invention. Les mêmes numéros de référence désignent les mêmes éléments que sur la figure 2. Sur la figure 3, en plus de la plaque à clapets 21, de la butée de clapet 24 et du clapet de refoulement 22, sont représentés le clapet d'aspiration 28 et un joint de plaque à clapets 29. On a aussi représenté les deux rivets de fixation 26 qui sont des moyens de fixation préférés mais qui pourraient être remplacés par d'autres moyens connus. Le clapet de refoulement 22 comprend une partie de largeur réduite 220 sur laquelle on reviendra ultérieurement et une encoche 221 pour permettre le passage d'un ergot 25 assurant le centrage et le blocage en rotation des composants et plus spécialement du clapet 22. Si nécessaire, on peut prévoir un autre ergot pour bloquer le ressort 23.

La solution selon l'invention a aussi pour avantages la simplicité en réduisant au minimum le nombre de pièces, l'augmentation de leur robustesse (minimum de perçages des composants les plus fragiles) et la réduction du coût en ne nécessitant pas d'usinage de la butée qui est en général une pièce en métal fritté.

Dans certaines applications, notamment commerciales, nécessitant une puissance importante, donc une grosse cylindrée et un débit de fluide important, se pose le problème d'acheminer ce débit avec un équipement compresseur le plus compact possible. Ce problème ne peut se résoudre de manière satisfaisante avec des passages de grand diamètre dans la plaque à clapets car il est alors très difficile de loger un clapet adéquat. Une solution consiste alors à prévoir deux passages plus petits dans la plaque à clapets pour le refoulement ainsi que pour l'aspiration.

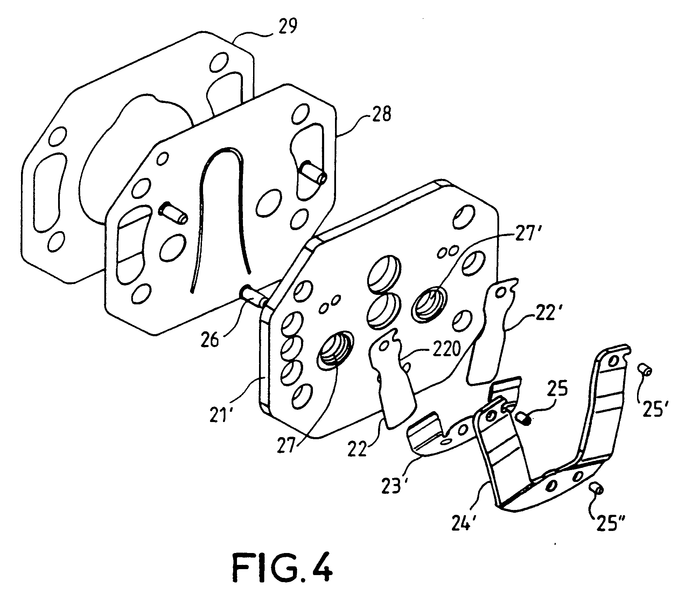

La figure 4 représente un mode de réalisation du dispositif de clapets de refoulement selon l'invention, adapté à cette solution. La plaque à clapet 21' comporte deux passages de refoulement 27 et 27' fermés chacun par un clapet de refoulement 22 et 22' respectivement. Ces clapets sont maintenus solidaires de la plaque à clapets à une extrémité. Leur extrémité libre est maintenue en contact glissant avec une plaque 21' par un ressort unique 23' en forme de U dont les branches appuient respectivement sur les extrémités libres des clapets et dont la partie centrale est fixée à la plaque à clapets par un rivet 26 qui sert aussi à fixer, dans sa partie centrale, une butée de clapet unique 24' également en forme de U. Les branches de cette butée sont fixées à leur extrémité, en même temps que l'extrémité non libre des clapets, par d'autres rivets 26. Le fonctionnement de chaque clapet de refoulement est strictement identique à celui du clapet de refoulement unique de la figure 3.

Pour le centrage et le blocage en rotation des divers composants on prévoit par exemple trois ergots 25, 25' et 25".

Les autres éléments représentés sont identiques à ceux de la figure 3 et portent les mêmes références.

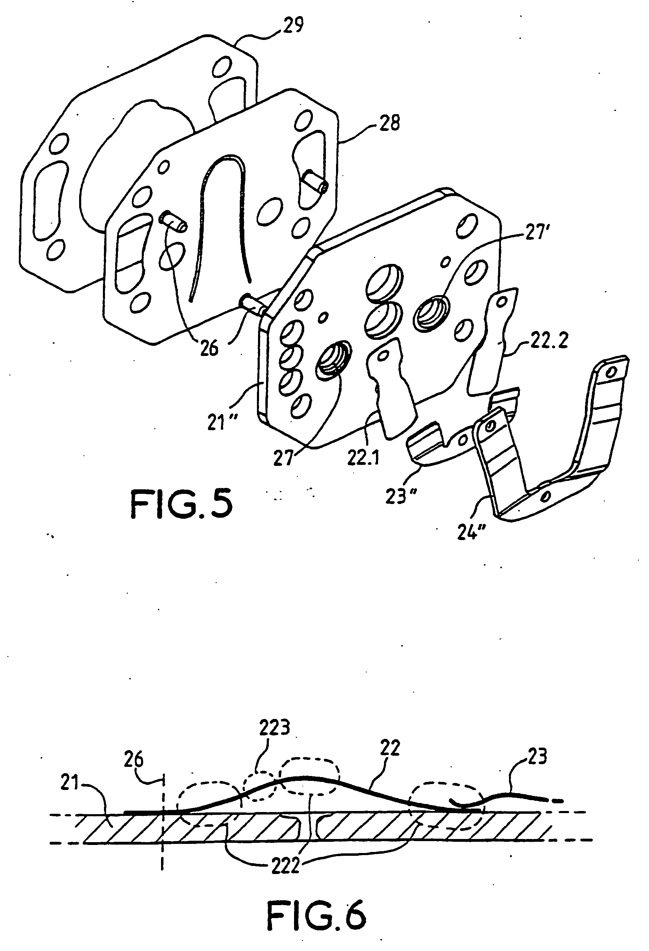

La figure 5 représente une variante du dispositif de la figure 4. La seule modification apportée est la suppression des ergots de centrage qui implique donc une légère modification de la plaque à clapets, 21" au lieu de 21', des clapets de refoulement, 22.1 et 22.2 au lieu de 22 et 22', du ressort et de la butée, 23"et 24" au lieu de 23' et 24'.

Pour conserver la fonction de blocage en rotation des clapets et du ressort, on prévoit seulement de modifier la section cylindrique des trous de fixation de ceux-ci qui n'est plus circulaire, comme c'est le cas habituellement, mais de préférence une section en étoile (mais d'autres formes seraient également possibles). La matière des rivets 26 déplacée par l'opération de rivetage vient occuper le volume en forme d'étoile ou autres formes à l'intérieur des clapets et du ressort, assurant de ce fait leur immobilisation en rotation.

Il est évident que cette solution peut également être adoptée dans le cas du mode de réalisation à un seul clapet de la figure 3.

Il est maintenant nécessaire de revenir sur la forme des clapets de refoulement, à savoir l'utilisation d'une partie de largeur réduite 220.

Pour les pressions de fluide importantes qui peuvent être utilisées, il peut se produire, en position de fermeture du clapet de refoulement (pression dans la chambre de refoulement devenant très supérieure à la pression dans la chambre de compression/détente), un effet d'extrusion du clapet par le passage de refoulement, en quelque sorte un poinçonnage à l'envers. Pour éviter des conséquences néfastes, on doit alors augmenter l'épaisseur de la lame de clapet, ce qui se traduit par une raideur accrue. Pour compenser cela, on prévoit donc de réduire la largeur du clapet dans une zone de moindre contrainte.

La figure 6 illustre le principe de cette caractéristique. Cette figure représente schématiquement la plaque à clapets 21, le clapet 22 en position d'ouverture fixé par le rivet 26 et le ressort 23. On voit qu'en position d'ouverture, du fait des déformations du clapet, des contraintes maximum s'exercent dans les zones 222 approximativement délimitées par les tirets. Par contre, dans une zone telle que 223, délimitée approximativement par les pointillés, les contraintes sont minimum et on peut donc y introduire la réduction de largeur 220.

Bien entendu, les exemples de réalisation décrits ne sont nullement limitatifs de l'invention. Celle-ci s'applique quel que soit le type de compresseur et quel que soit le type de fluide frigorigène utilisé.

## Revendications

1. Dispositif de clapet de refoulement pour compresseur de fluide frigorigène du type comprenant une plaque à clapets (11 ; 21 ; 21' ; 21 ") percée d'au moins un passage de refoulement de fluide, au moins un clapet de refoulement (13 ; 22 ; 22' ; 22.1, 22.2) venant fermer ledit passage du côté aval dans le sens du refoulement du fluide et au moins une butée (14 ; 24 ; 24' ; 24") de clapet de refoulement, ledit clapet de refoulement (22 ; 22' ; 22.1, 22.2) étant rendu solidaire, à une de ses extrémités, de la plaque à clapets (21 ; 21' ; 21") par des premiers moyens de fixation (26 ; 26'), **caractérisé en ce que** l'autre extrémité dudit clapet de refoulement (22 ; 22' ; 22.1, 22.2) est maintenue en contact permanent glissant avec la plaque à clapets par un ressort (23 ; 23' ; 23"), rendu solidaire de la plaque à clapets par des seconds moyens de fixation (26 ; 26').

2. Dispositif de clapet de refoulement selon la revendication 1, **caractérisé en ce que** ledit ressort est constitué par une lame élastique fixée à une extrémité à la plaque à clapets par lesdits seconds moyens de fixation et appuyant, vers son autre extrémité, le clapet sur la plaque à clapets.

3. Dispositif de clapet de refoulement selon la revendication 2, **caractérisé en ce que** lesdits premiers et seconds moyens de fixation (26) assurent en même temps la fixation de ladite butée de clapet (24 ; 24' ; 24") sur la plaque à clapets de manière que la butée réalise le bridage du clapet de refoulement et du ressort sur la plaque à clapets au niveau de ces moyens de fixation.

4. Dispositif de clapet de refoulement selon l'une quelconque des revendications précédentes, **caractérisé en ce que** lesdits premiers et seconds moyens de fixation sont constitués par des rivets (26).

5. Dispositif de clapet de refoulement selon l'une quelconque des revendications précédentes, **caractérisé en ce qu'**il comprend en outre des ergots (25 ; 25'; 25") fixés dans la plaque à clapets (21 ; 21') pour bloquer en rotation ledit clapet de refoulement (22 ; 22, 22') et ledit ressort (23 ; 23').

6. Dispositif de clapet de refoulement selon l'une quelconque des revendications précédentes, **caractérisé en ce qu'**il comprend deux clapets de refoulement (22 ; 22') fermant deux passages dans la plaque à clapets (21'), **en ce que** ledit ressort (23') est un ressort unique pour les deux clapets et **en ce que** ladite butée (24') est une butée unique pour les deux clapets.

7. Dispositif de clapet de refoulement selon la revendication 6, **caractérisé en ce que** ledit ressort (23') est en forme de U dont les branches appuient respectivement les extrémités libres des clapets contre la plaque à clapets et dont la partie centrale est fixée à la plaque à clapets par lesdits seconds moyens de fixation (26) et **en ce que** la dite butée de clapet (24') est en forme de U dont les branches servent respectivement de butée aux deux clapets, dont les extrémités sont fixées à la plaque à clapets par lesdits premiers moyens de fixation (26) et dont la partie centrale est fixée à la plaque à clapets par lesdits seconds moyens de fixation (26).

8. Dispositif de clapet de refoulement selon l'une quelconque des revendications 1 à 4 ou 6 ou 7, **caractérisé en ce que** lesdits moyens de fixation (26') et le ou lesdits clapets de refoulement (22.1, 22.2) et ledit ressort (23") sont prévus pour bloquer en même temps en rotation le ou les clapets et le ressort.

9. Dispositif de clapet de refoulement selon la revendication 8, **caractérisé en ce que** les moyens de fixation sont constitués par des rivets (26) coopérant avec des orifices de fixation dans le ou lesdits clapets de refoulements (22.1, 22.2) et le ressort (23") qui ont une section de forme non circulaire.

10. Dispositif de clapet de refoulement selon la revendication 9, **caractérisé en ce que** ladite forme de la section des orifices est en étoile.

11. Dispositif de clapet de refoulement selon l'une quelconque des revendications précédentes, **caractérisé en ce que** le ou lesdits clapets de refoulement (22 ; 22' ; 22.1, 22.2) présentent une partie (220) de largeur réduite dans une zone de moindre contrainte (223) pour adapter la raideur desdits clapets.

## Claims

1. Delivery valve device for a refrigerant compressor of the type comprising a valve plate (11; 21;21';21") pierced with at least one fluid delivery passage, at least one delivery valve (13;22;22';22.1,22.2) closing said passage on the downstream side in the direction of delivery of the fluid, and at least one delivery valve stop (14;24;24';24"), said delivery valve (22;22';22.1,22.2) being secured, at one of its ends, to the valve plate (21;21';21") by first fixing means (26;26'), **characterized in that** the other end of said delivery valve (22;22';22.1,22.2) is held in permanent sliding contact with the valve plate by a spring (23;23';23") secured to the valve plate by second fixing means (26;26').

2. Delivery valve device according to Claim 1, **characterized in that** said spring consists of an elastic leaf fixed at one end to the valve plate by said second fixing means and pressing, toward its other end, the valve onto the valve plate.

3. Delivery valve device according to Claim 2, **characterized in that** said first and second fixing means (26) at the same time fix said valve stop (24;24';24") to the valve plate so that the stop clamps the delivery valve and the spring onto the valve plate at these fixing means.

4. Delivery valve device according to any one of the preceding claims, **characterized in that** said first and second fixing means consist of rivets (26).

5. Delivery valve device according to any one of the preceding claims, **characterized in that** it further comprises pegs (25;25';25") fixed into the valve plate (21;21') to prevent the said delivery valve (22;22,22') and said spring (23;23') from rotating.

6. Delivery valve device according to in any one of the preceding claims, **characterized in that** it comprises two delivery valves (22;22') closing two passages in the valve plate (21'), **in that** said spring (23') is a single spring for the two valves and **in that** said stop (24') is a single stop for the two valves.

7. Delivery valve device according to Claim 6, **characterized in that** said spring (23') is in the shape of a U the branches of which respectively press the free ends of the valves against the valve plate and the central part of which is fixed to the valve plate by said second fixing means (26) and **in that** said valve stop (24') is in the shape of a U the branches of which act as respective stops for the two valves, the ends of which are fixed to the valve plate by said first fixing means (26) and the central part of which is fixed to the valve plate by said second fixing means (26).

8. Delivery valve device according to any one of Claims 1 to 4 or 6 or 7, **characterized in that** said fixing means (26') and said delivery valve or valves (22.1,22.2) and said spring (23") are designed to, at the same time, prevent the valve or valves and the spring from rotating.

9. Delivery valve device according to Claim 8, **characterized in that** the fixing means consist of rivets (26) collaborating with fixing orifices in said delivery valve or valves (22.1,22.2) and the spring (23") which have a cross section of non-circular shape.

10. Delivery valve device according to Claim 9, **characterized in that** said shape of the cross section of the orifices is star shaped.

11. Delivery valve device according to any one of the preceding claims, **characterized in that** said delivery valve or valves (22;22';22.1,22.2) have a part (220) of reduced width in a region of lesser stress (223) so as to adapt the stiffness of said valves.

## Patentansprüche

1. Förderventilvorrichtung für Kühlungsfluidkompressor des Typs, der eine Ventilplatte (11; 21; 21'; 21") durch die wenigstens ein Fluidförderdurchlass verläuft, wenigstens ein Förderventil (13; 22; 22'; 22.1, 22.2), das den Durchlass stromabseitig in Förderrichtung des Fluids verschließt, und wenigstens einen Förderventilanschlag (14; 24; 24'; 24") umfasst, wobei das Förderventil (22; 22'; 22.1, 22.2) an einem seiner Enden mit der Ventilplatte (21; 21'; 21") durch erste Befestigungsmittel (26; 26') verbunden ist, **dadurch gekennzeichnet, dass** das andere Ende des Förderventils (22; 22'; 22.1, 22.2) durch eine Feder (23; 23'; 23"), die mit der Ventilplatte durch zweite Befestigungsmittel (26; 26') fest verbunden ist, in einem dauernden Gleitkontakt mit der Ventilplatte gehalten wird.

2. Förderventilvorrichtung nach Anspruch 1, **dadurch gekennzeichnet, dass** die Feder aus einem elastischen Plättchen gebildet ist, die an einem Ende durch die zweiten Befestigungsmittel an der Ventilplatte befestigt ist und in der Nähe seines anderen Endes das Ventil gegen die Ventilplatte drängt.

3. Förderventilvorrichtung nach Anspruch 2, **dadurch gekennzeichnet, dass** die ersten und die zweiten Befestigungsmittel (26) gleichzeitig die Befestigung des Ventilanschlags (24; 24'; 24") an der Ventilplatte gewährleisten, derart, dass der Anschlag die Anflanschung des Förderventils und der Feder an der Ventilplatte auf Höhe dieser Befestigungsmittel verwirklicht.

4. Förderventilvorrichtung nach einem der vorhergehenden Ansprüche, **dadurch gekennzeichnet, dass** die ersten und die zweiten Befestigungsmittel durch Nieten (26) gebildet sind.

5. Förderventilvorrichtung nach einem der vorhergehenden Ansprüche, **dadurch gekennzeichnet, dass** sie außerdem Ansätze (25; 25'; 25") aufweist, die in der Ventilplatte (21; 21') befestigt sind, um die Drehung des Förderventils (22; 22, 22') und der Feder (23; 23') zu blockieren.

6. Förderventilvorrichtung nach einem der vorhergehenden Ansprüche, **dadurch gekennzeichnet, dass** sie zwei Förderventile (22; 22') umfasst, die zwei Durchlässe in der Ventilplatte (21') verschließen, dass die Feder (23') eine einzige Feder für die zwei Ventile ist und dass der Anschlag (24') ein einziger Anschlag für die zwei Ventile ist.

7. Förderventilvorrichtung nach Anspruch 6, **dadurch gekennzeichnet, dass** die Feder (23') die Form eines U hat, dessen Schenkel die jeweiligen freien Enden der Ventile gegen die Ventilplatte drängen und dessen Mittelabschnitt an der ventilplatte durch die zweiten Befestigungsmittel (26) befestigt ist, und dass der Ventilanschlag (24') die Form eines U besitzt, dessen Schenkel als jeweiliger Anschlag an den beiden Ventilen dienen, deren Enden an der ventilplatte durch die ersten Befestigungsmittel (26) befestigt sind und dessen Mittelabschnitt an der Ventilplatte durch die zweiten Befestigungsmittel (26) befestigt ist.

8. Förderventilvorrichtung nach einem der Ansprüche 1 bis 4 oder 6 oder 7, **dadurch gekennzeichnet, dass** die Befestigungsmittel (26') und das oder die Förderventile (22.1, 22.2) und die Feder (23") dazu vorgesehen sind, gleichzeitig die Drehung des oder der Ventile und der Feder zu blockieren.

9. Förderventilvorrichtung nach Anspruch 8, **dadurch gekennzeichnet, dass** die Befestigungsmittel durch Nieten (26) gebildet sind, die mit Befestigungsöffnungen in dem oder den Förderventilen (22.1, 22.2) und der Feder (23"), die einen nicht kreisförmigen Querschnitt besitzen, zusammenwirken.

10. Förderventilvorrichtung nach Anspruch 9, **dadurch gekennzeichnet, dass** der Querschnitt der Öffnungen sternförmig ist.

11. Förderventilvorrichtung nach einem der vorhergehenden Ansprüche, **dadurch gekennzeichnet, dass** das oder die Förderventile (22; 22'; 22.1, 22.2) in einer weniger beanspruchten Zone (223) einen Abschnitt (220) mit verringerter Breite aufweisen, um die Starrheit der Ventile anzupassen.
